# EUROPEAN PATENT APPLICATION

(11) **EP 1 630 931 A2**
(43) Date of publication of application: **01.03.2006**
(21) Application number: 05018540.4
(22) Date of filing: 25.08.2005
(51) Int. Cl.: H02K 3/52

(54) **Stator and motor**

(30) Priority: 27.08.2004 JP 2004249136
(71) Applicant: AISIN SEIKI KABUSHIKI KAISHA, Kariya-shi, Aichi-ken 448-8650 (JP)
(72) Inventor: Torii, Atsushi, Kariya-shi Aichi-ken 448-8650 (JP); Sakurai, Junichiro, Kariya-shi Aichi-ken 448-8650 (JP); Hoshino, Akinori, Kariya-shi Aichi-ken 448-8650 (JP); Nakamoto, Tokunari, Kariya-shi Aichi-ken 448-8650 (JP); Sakuma, Masafumi, Kariya-shi Aichi-ken 448-8650 (JP); Tojima, Yuki, Kariya-shi Aichi-ken 448-8650 (JP); Akimae, Syunichiro, Kariya-shi Aichi-ken 448-8650 (JP); Fujita, Masanao, Kariya-shi Aichi-ken 448-8650 (JP)
(74) Representative: TBK-Patent

(57) **Abstract**

A stator includes a cylindrical-shaped stator core (10) including multiple teeth (10a) projecting in a radial direction of the stator core, multiple coils (30) wound around each of the multiple teeth, multiple bus rings (40) arranged at an axially end portion of the stator core and each electrically connected to each of the multiple coils, and multiple wire pulled-out portions (31, 32) formed on both ends of the coil and pulled out towards the bus ring characterized in that the stator further comprises multiple connection terminal portions (41a, 42a, 43a, 44a) integrally formed on the respective bus rings in such a manner that the connection terminal portions are arranged at respective predetermined intervals in a peripheral direction of the stator core and each extending towards each wire pulled-out portion. A tip end portion of the connection terminal portion is bent so as to form a substantially U-shape for pinching the wire pulled-out portion.

## Description

### FIELD OF THE INVENTION

This invention generally relates to a stator and a motor.

### BACKGROUND

Known stators are disclosed in JP2004-23929A, and page 7 of a document distributed at 22^{nd} Motor Technology Forum, No. 7, held on June 16, 2003 under the sponsorship of Japan Management Association. According to each stator for a motor disclosed, wire connections among three-phase coils (3-phase connection, and neutral point connection) wound around a teeth portion of a stator core (including a segmented type core) are conducted by electrically connecting a bus ring (or conductive wiring) of each phase coil formed on an inner peripheral side or an outer peripheral side of the stator, and each wire pulled-out portion pulled out from the coil by means of a terminal clamp (i.e. conductive holding member). A connection between the bus ring and the terminal clamp is conducted by means of fusing or soldering while a connection between the wire pulled-out portion and the terminal clamp is performed by means of fusing or soldering (with removing coating on the wire pulled-out portion).

When the wire pulled-out portion is electrically connected to the bus ring by means of the terminal clamp according to the aforementioned stator for a motor, a connecting operation is required at 4 portions per coil, thereby causing a long connecting operation time.

Thus, a need exists for a stator and a motor which can improve a workability of connection between a coil and a bus ring.

### SUMMARY OF THE INVENTION

According to an aspect of the present invention, a stator includes a cylindrical-shaped stator core including multiple teeth projecting in a radial direction of the stator core, multiple coils wound around each of the multiple teeth, multiple bus rings arranged at an axially end portion of the stator core and each electrically connected to each of the multiple coils, and multiple wire pulled-out portions formed on both ends of the coil and pulled out towards the bus ring characterized in that the stator further comprises multiple connection terminal portions integrally formed on the respective bus rings in such a manner that the connection terminal portions are arranged at respective predetermined intervals in a peripheral direction of the stator core and each extending towards each wire pulled-out portion. A tip end portion of the connection terminal portion is bent so as to form a substantially U-shape for pinching the wire pulled-out portion.

. According to the aforementioned invention, the wire pulled-out portion of the coil and the bus ring may be directly and electrically connected to each other. Thus, a terminal clamp that is required according to a conventional invention is not necessary. A connecting operation per coil may be reduced, thereby obtaining a motor with excellent workability. A reduction of cost and size of the motor may be achieved accordingly.

### BRIEF DESCRIPTION OF THE DRAWINGS

The foregoing and additional features and characteristics of the present invention will become more apparent from the following detailed description considered with reference to the accompanying drawings, wherein:

Fig. 1 is a plane view showing a structure of a stator for a motor according to an embodiment of the present invention;

Fig. 2 is a enlarged partial plane view showing a structure of the stator for a motor according to the embodiment of the present invention;

Fig. 3 is a cross-sectional view taken along the line A-A of Fig. 2;

Fig. 4 is a cross-sectional view taken along the line B-B of Fig. 2;

Fig. 5 is a cross-sectional view taken along the line C-C of Fig. 2;

Fig. 6 is a cross-sectional view taken along the line D-D of Fig. 2;

Fig. 7 is a cross-sectional view taken along the line E-E of Fig. 2;

Fig. 8 is a plane view showing a structure of a first insulating member of the stator for a motor according to the embodiment of the present invention;

Fig. 9 is a left-side view showing a structure of the first insulating member of the stator for a motor according to the embodiment of the present invention; and

Fig. 10 is a cross-sectional view taken along the line F-F of Fig. 8.

### DETAILED DESCRIPTION

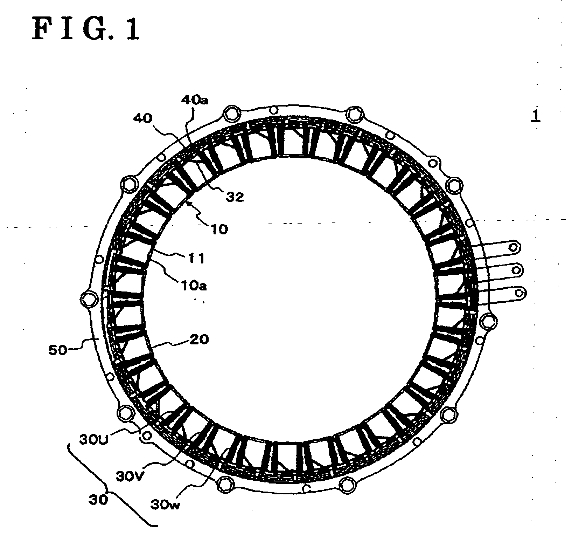

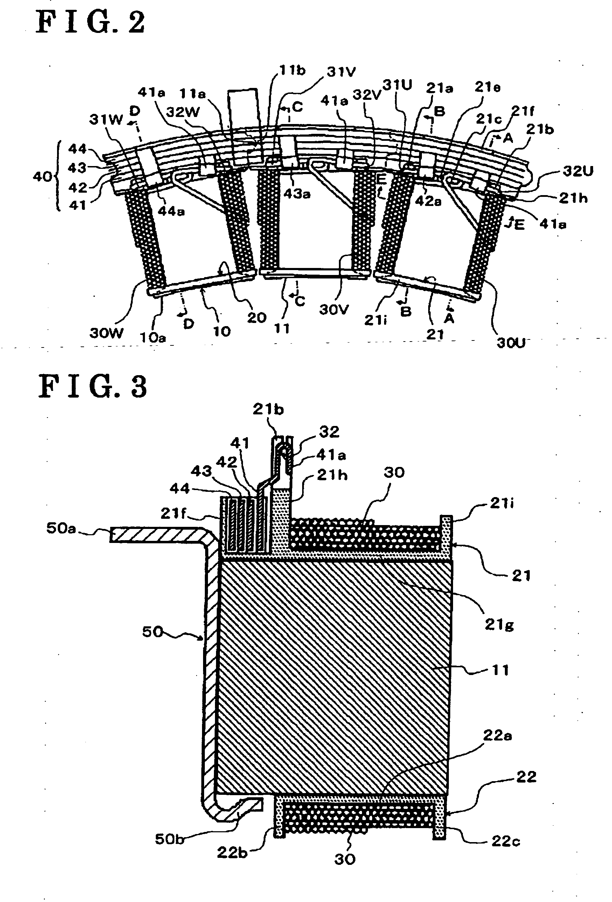

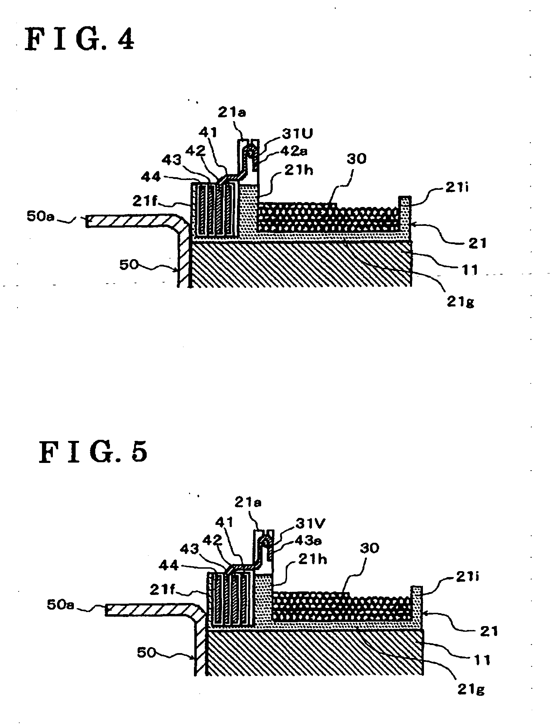

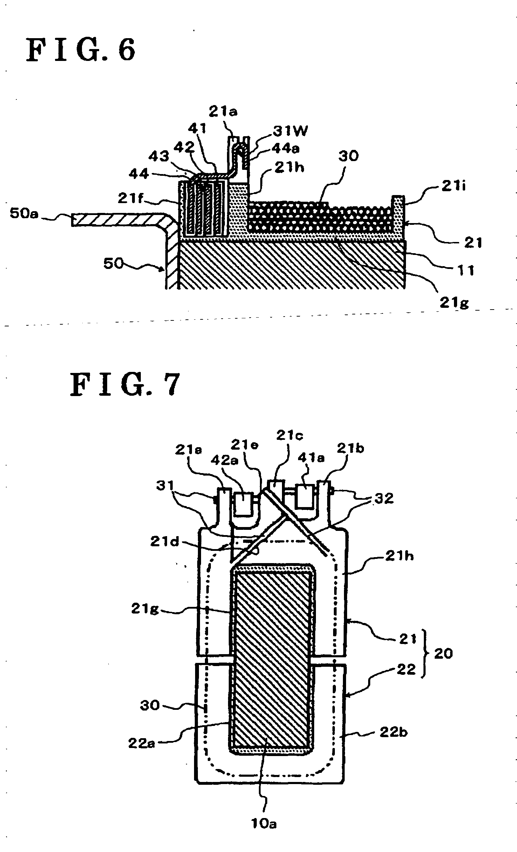

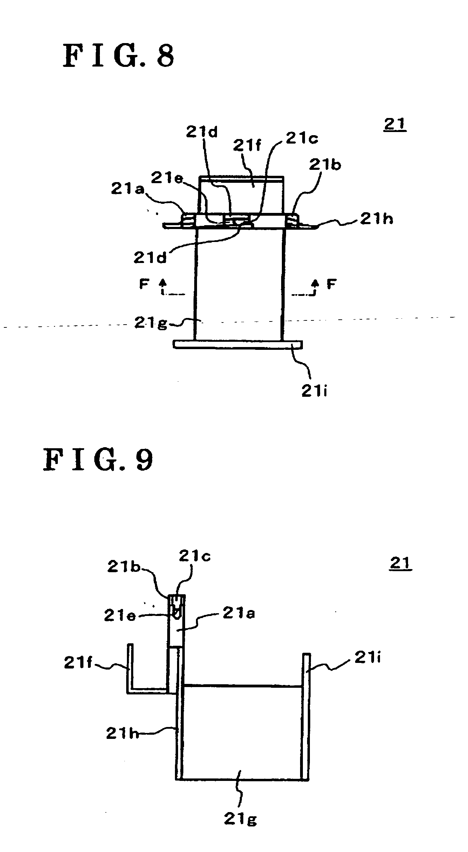

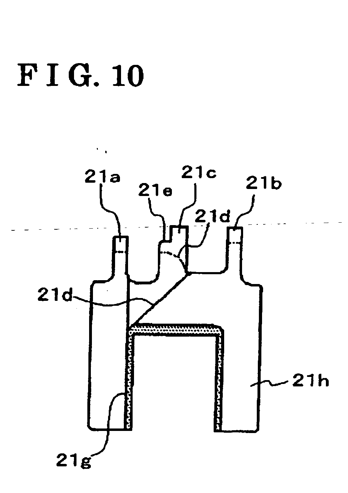

An embodiment of the present invention is explained with reference to the attached drawings. Fig. 1 is a plane view showing a structure of a stator for a motor and is viewed from an axial direction of the motor. Fig. 2 is an enlarged partial plane view showing the structure of the stator for a motor. Fig. 3 is a cross sectional view of a portion including a neutral point connection in the stator for a motor. Fig. 4 is a cross sectional view of a portion including a U-phase connection in the stator for a motor. Fig. 5 is a cross sectional view of a portion including a V-phase connection in the stator for a motor. Fig. 6 is a cross sectional view of a portion including a W-phase connection in the stator for a motor. Fig. 7 is a cross sectional view showing the structure of the stator for a motor. Fig. 8 is a plane view showing a structure of a first insulating member of the stator for a motor. Fig. 9 is a left-side view showing the structure of the first insulating member. Fig. 10 is a cross sectional view showing the structure of the first insulating member. A rotor for a motor is omitted from each figure for an easy explanation.

A motor according to the present embodiment is a 3-phase Y-connection type motor and includes a stator 1. As shown in Fig. 1, the stator 1 includes a stator core 10, an insulating member 20, a coil 30, a bus ring 40, and a core holder 50.

As shown in Fig. 1, the stator core 10 includes multiple teeth 10a projecting in a radial direction and forming multiple core segments 11 arranged in an annular form. Adjacent core segments 11 are arranged such that a convex portion 11a and a concave portion 11b thereof match with each other. The stator core 10 may be constituted as a unit, not a segmented type. Further, a rotor (not shown) is arranged on an inner peripheral side of the stator core 10.

The insulating member 20 is of a bobbin shape for electrically insulating the coil 30 from the stator core 10 and provided at each of the multiple teeth 10a of the stator core 10. As shown in Figs. 3 and 7, the insulating member 20 is segmented into a first insulating member 21 and a second insulating member 22 for the purposes of assembly. The first insulating member 21 includes a coil receiving portion 21g between an outer peripheral flange portion 21h and an inner peripheral flange portion 21i. The second insulating member 22 includes a coil receiving portion 22a between an outer peripheral flange portion 22b and an inner peripheral flange portion 22c.

The first insulating member 21 includes a first holding portion 21a, a second holding portion 21b, a turning portion 21c, a guide portion 21d, a stepped portion 21e, and a bus ring receiving portion 21f all of them which are constituted as a unit as shown in Figs. 2, and 7 to 10.

The first holding portion 21a is formed on an outer peripheral side of the outer peripheral flange portion 21h and is of a column shape extending in an axial direction of the motor. The first holding portion 21a includes a groove at a tip end in an axially outward direction for pinching to hold a first wire pulled-out portion 31 of the coil 30 as shown in Figs. 2, and 7. A bottom portion of the groove is arranged such that a height thereof is substantially same as a height of a highest portion of the guide portion 21d as shown in Fig. 10. Further, as shown in Figs 7 and 10, a concave portion is formed between the first holding portion 21a and the turning portion 21c such that the concave portion has a substantially U-shape on a peripheral plane of the motor.

The second holding portion 21b is formed on the outer peripheral side of the outer peripheral flange portion 21h in Such a manner that the second holding portion 21b is arranged on an opposite side to the first holding portion 21a in the peripheral direction of the motor, and is of a column shape extending in the axial direction of the motor. The second holding portion 21b includes a groove at a tip end in the axially outward direction for pinching to hold a second wire pulled-out portion 32 of the coil 30 as shown in Figs. 2, and 7. A bottom portion of the groove is arranged such that a height thereof is substantially same as that of the stepped portion 21e. In addition, the bottom portion of the second holding portion 21b is arranged at a higher position than the first holding portion 21a. Further, a convex portion is formed between the second holding portion 21b and the turning portion 21c such that the concave portion has a substantially U-shape on the peripheral plane of the motor.

The turning portion 21c is formed, on the outer peripheral side of the outer peripheral flange portion 21h, between the first and second holding portions 21a and 21b such that predetermined intervals are formed therewith respectively. The turning portion 21c is of a column shape extending in the axial direction of the motor. Further, as shown in Figs. 2 and 7, the turning portion 21c serves as a turning point by means of which the first wire pulled-out portion 31 pulled out from the coil 30 is guided to the first holding portion 21a in an opposite direction to a winding direction of the coil 30, i.e. coil winding direction, and also by means of which the second wire pulled-out portion 32 pulled out from the coil 30 is guided to the second holding portion 21b in an opposite direction to the coil winding direction. The turning portion 21c includes the stepped portion 21e provided for preventing the first wire pulled-out portion 31 and the second wire pulled-out portion 32 from interfering with each other. The stepped portion 21e supports the second wire pulled-out portion 32.

The guide portion 21d is of a stepped or groove shape for guiding the first wire pulled-out portion 31 pulled out from the coil 30 to the first holding portion 21a via an outer periphery of the turning portion 21c as shown in Figs. 7, 8, and 10. The guide portion 21d is arranged at a lower position than the stepped portion 21e. A height of a highest portion of the guide portion 21d is substantially same as that of the bottom portion of the groove portion of the first holding portion 21a.

The bus ring receiving portion 21f is provided for receiving the bus ring 40, and formed on an outer peripheral side of the first and second holding portions 21a and 21b, and the turning portion 21c as shown in Figs. 2, 8, and 9.

The coil 30 is formed by a wire rod on which an insulation coating is provided and constituted by winding the wire rod on an outer periphery of the insulating member 20 that is assembled to the stator core 10 as shown in Figs. 1, 2 and 7. The first wire pulled-out portion 31 and the second wire road pull-out portion 32 are pulled out from both ends of the coil 30. The first wire pulled-out portion 31 is a winding start portion pulled out from an inner peripheral end side of the coil 30 while the second wire pulled-out portion 32 is a winding end portion pulled out from an outer peripheral end side of the coil 30. The first wire pulled-out portion 31 is guided to the guide portion 21d at a time of being pulled out from the inner peripheral end side of the coil 30, and then further guided in an opposite direction to the coil winding direction by means of the turning portion 21c so as to be held by the first holding portion 21a. The second wire pulled-out portion 32 pulled out from the outer peripheral side of the coil 30 is guided in a direction opposite to the coil winding direction by means of the turning portion 21c in such a manner that the second wire pulled-out portion is made contact with the stepped portion 21e, and then held by the second holding portion 21b. Then, a connection terminal portion 42a, 43a, or 44a of the bus ring 40, i.e. precisely a bus ring 42, 43 or 44, is in contact with a portion of the first wire pulled-out portion 31 arranged between the turning portion 21c and the first holding portion 21a so as to engage therewith as shown in Figs. 2, 4 to 6. Further, a connection terminal portion 41a of the bus ring 40, i.e. precisely a first bus ring 41, is in contact with a portion of the second wire pulled-out portion 32 arranged between the turning portion 21c and the second holding portion 21b is so as to engage therewith as shown in Figs. 2 and 3.

As shown in Figs. 1 and 2, the bus ring 40 is a ring shaped conductive member connected to the wire pulled-out portions 31 and 32 of the coil 30. The bus ring 40 is arranged on an outer peripheral side of the coil 30 and received in the bus ring receiving portion 21f by being inserted from the axial direction of the motor. As shown in Fig. 2, the bus ring 40 includes the first bus ring 41 for neutral point connection, the second bus ring 42 for U-phase connection, the third bus ring 43 for V-phase connection, and the fourth bus ring 44 for W-phase connection in order from the inner peripheral side. The order of arrangement of the bus rings 41 to 44 may be appropriately changed. Each surface of the first, second, third, and fourth bus rings 41 to 44 except for each connection terminal portion 41a to 44a is equipped with an insulation portion for the purposes of preventing a short circuit to the adjacent bus ring. The first, second, third, and fourth bus rings 41 to 44 may be alternatively constituted as a unit by means of an insulation resin.

The first bus ring 41 includes the connection terminal portions 41a for a direct electrical connection with the second wire pulled-out portion 32 for the coil 30, precisely, coils 30U, 30V, and 30W (i.e. end portions of neutral point). Each connection terminal portion 41a is constituted as a unit with a ring-shaped portion (i.e. main body) of the first bus ring 41. The connection terminal portion 41a extends from an end face of the main body of the first bus ring 41 in the axial direction of the motor towards the second wire pulled-out portion 32, precisely, second wire rod pull-put portions 32U, 32V, and 32W as shown in Fig. 3. Then, the connection terminal portion 41a forms into a substantially U-shape opening towards the stator core 10 so as to engage with the second wire pulled-out portions 32U, 32V, and 32W.

The second bus ring 42 includes the- connection terminal portion 42a for a direct electrical connection with a first wire pulled-out portion 31U for the U-phase coil 30U as shown in Figs. 2 and 4. The connection terminal portion 42a is formed as a unit with a ring-shaped portion (i.e. main body) of the second bus ring 42. The connection terminal portion 42a extends from an end face of the main body of the second bus ring 42 in the axial direction of the motor towards the first wire pulled-out portion 31U. Then, the connection terminal portion 42a forms into a substantially U-shape by a portion of the connection terminal portion 42a opening towards the stator core 10 so as to engage with the first wire pulled-out portion 31U.

The third bus ring 43 includes the connection terminal portion 43a for a direct electrical connection with a first wire pulled-out portion 31V for the V-phase coil 30V as shown in Figs. 2 and 5. The connection terminal portion 43a is formed as a unit with a ring-shaped portion (i.e. main body) of the third bus ring 43. The connection terminal portion 43a extends from an end face of the main body of the third bus ring 43 in the axial direction of the motor towards the first wire pulled-out portion 31V. Then, the connection terminal portion 43a forms into a substantially U-shape by a portion of the connection terminal portion 43a opening towards the stator core 10 so as to engage with the first wire pulled-out portion 31V.

The fourth bus ring 44 includes the connection terminal portion 44a for a direct electrical connection with a first wire pulled-out portion 31W for the W-phase coil 30W as shown in Figs. 2 and 5. The connection terminal portion 44a is formed as a unit with a ring-shaped portion (i.e. main body) of the fourth bus ring 44. The connection terminal portion 44a extends from an end face of the main body of the fourth bus ring 44 in the axial direction of the motor towards the first wire pulled-out portion 31W. Then, the connection terminal portion 44a forms into a substantially U-shape by a portion of the connection terminal portion 44a opening towards the stator core 10 so as to engage with the first wire pulled-out portion 31W.

The core holder 50 supports the stator core 10, which is constituted by the multiple core segments 11 arranged in an annular form, from an outer peripheral side and one side of the axial direction of the motor as shown in Figs. 1 and 3. The core holder 50 includes a flange portion 50a and a supporting portion 50b on both end portions in the axial direction of the motor. The flange portion 50a apd the supporting portion 50b are formed as a unit. The flange portion 50a extends to the outer peripheral side from an end portion of the core holder 50 in the axial direction of the motor and close to the bus ring 40. The supporting portion 50b extends to the inner peripheral side from an opposite end portion of the stator core 10 to the portion from which the flange portion 50a extends, and supports one side of the stator core 10 in the axial direction of the motor.

Next, a manufacturing method of the stator 1 for a motor according to the present embodiment is explained below.

First, the insulating member 20 (i.e. first insulating member 21 and the second insulating member 22) is assembled to each core segment 11. Next, the coil 30 is wound on the coil receiving portions 21g and 22a of the first and second insulating members 21 and 22 respectively. Then, the first wire pulled-out portion 31 of the coil 30 is guided along the guide portion 21d and pulled in a direction opposite to the coil winding direction by means of the turning portion 21c. The first wire pulled-out portion 31 is held by the first holding portion 21a. The second wire pulled-out portion 32 of the coil 30 is made contact with the stepped portion 21e so as to be pulled in an opposite direction to the coil winding direction with reference to the turning portion 21c. The second wire pulled-out portion 32 is held by the second holding portion 21b. Accordingly, a winding tension of the coil 30 may be received or maintained by the turning portion 21c.

Next, the stator core 10 formed by the multiple core segments 11 (equipped with the insulating member 20 and the coil 30) which are combined to be arranged in the peripheral direction are assembled to the core holder 50 as shown in Figs. 1, 3 to 6. At this time, the first holding portion 21a, the second holding portion 21b, and the turning portion 21c face the flange portion 50a of the core holder 50.

Then, the bus ring 40 is assembled to the bus ring receiving portion 21f of the first insulating member 21. At this time, the first bus ring 41, the second bus ring 42, the third bus ring 43, and the fourth bus ring 44 are assembled in order from the inner peripheral side for preventing contact among the connection terminal portions 41a, 42a, 43a, and 44a. In case of assembling the first bus ring 41, the connection terminal portion 41a and the second wire pulled-out portion 32 are connected to each other as each portion of the second wire pulled-out portion 32 for the coils 30U, 30V and 30W arranged between the turning portion 21c and the second holding portion 21b engages with each connection terminal portion 41a. In case of assembling the second bus ring 42, the connection terminal portion 42a and the first wire pulled-out portion 31U are connected to each other as a portion of the first wire pulled-out portion 31U of the coil 30U arranged between the turning portion 21c and the first holding portion 21a engages with the connection terminal portion 42a. In case of assembling the third bus ring 43, the connection terminal portion 43a and the first wire pulled-out portion 31V are connected to each other as a portion of the first wire pulled-out portion 31V of the coil 30V arranged between the turning portion 21c and the first holding portion 21a engages with the connection terminal portion 43a. In case of assembling the fourth bus ring 44, the connection terminal portion 44a and the first wire pulled-out portion 31W are connected to each other as a portion of the first wire pulled-out portion 31W of the coil 30W arranged between the turning portion 21c and the first holding portion 21a engages with the connection terminal portion 44a.

Next, the connection terminal portions 41a, 42a, 43a, and 44a, and corresponding wire pulled-out portions 31U, 31V, 31W, and 32 are electrically connected, i.e. fusing is performed. In this case, two fusing electrodes (not shown) are shifted in a radial direction of the motor and then stopped when the connection terminal portions 41a, 42a, 43a, and 44a are positioned between the fusing electrodes. Then, the connection terminal portions 41a, 42a, 43a, and 44a are pinched by the fusing electrodes, to which a high voltage is applied so as to remove, i.e. fuse, the insulation coating provided on the wire pulled-out portions 31U, 31V, 31W and 32. Accordingly, the connection terminal portions 41a, 42a, 43a, and 44a and corresponding wire pulled-out portions 31U, 31V, 31W, and 32 are electrically connected (i.e. fusing). The fusing process may be simplified and time may be reduced.

According to the aforementioned embodiment, the wire pulled-out portions 31 and 32 are guided or pulled in an opposite direction to the coil winding direction by means of the turning portion 21c. Thus, a winding tension of the coil 30 may be received by the turning portion 21c. The wire pulled-out portions 31 and 32 may be surely secured without dropping off, thereby simplifying the winding operation. Further, the first wire pulled-out portion 31 and the second wire pulled-out portion 32 are pulled in such a manner that positions thereof in the axial direction of the motor are different from each other by means of the stepped portion 21e, thereby assuring space for receiving the fusing electrodes in the peripheral direction. Furthermore, a moving distance of the fusing electrodes at a time of fusing performed is reduced and thus workability may be enhanced. Furthermore, the number of connection operations per coil is reduced from 4 (according to the conventional invention) to 2, the workability may be further enhanced. Since no members contact with the fusing electrodes at a time of electrical connection, excellent workability and work time may be achieved. Furthermore, the motor with excellent space efficiency may help reduction of cost and size.

Further, according to the aforementioned embodiment, the wire pulled-out portions 31 and 32 pulled out are arranged in the peripheral direction of the motor, thereby achieving a high space efficiency.
A stator includes a cylindrical-shaped stator core (10) including multiple teeth (10a) projecting in a radial direction of the stator core, multiple coils (30) wound around each of the multiple teeth, multiple bus rings (40) arranged at an axially end portion of the stator core and each electrically connected to each of the multiple coils, and multiple wire pulled-out portions (31, 32) formed on both ends of the coil and pulled out towards the bus ring characterized in that the stator further comprises multiple connection terminal portions (41a, 42a, 43a, 44a) integrally formed on the respective bus rings in such a manner that the connection terminal portions are arranged at respective predetermined intervals in a peripheral direction of the stator core and each extending towards each wire pulled-out portion. A tip end portion of the connection terminal portion is bent so as to form a substantially U-shape for pinching the wire pulled-out portion.

## Claims

1. A stator (1) comprising a cylindrical-shaped stator core (10) including
a plurality of teeth (10a) projecting in a radial direction of the stator core,
a plurality of coils (30) formed by a plurality of wires being wound around each of the plurality of teeth,
a plurality of bus rings (40) arranged at an axially end portion of the stator core and each electrically connected to predetermined coils of the plurality of coils, and
a plurality of wire pulled-out portions (31, 32) formed on both ends of the coil and pulled out towards the bus ring
**characterized in that**
the stator further comprises a plurality of connection terminal portions (41a, 42a, 43a, 44a) integrally formed on the respective bus rings in such a manner that the connection terminal portions are arranged at respective predetermined intervals in a circumferential direction of the stator core and each extending towards the wire pulled-out portion, a tip end portion of the connection terminal portion being bent so as to form a substantially U-shape for pinching the wire pulled-out portion.

2. A stator (1) according to claim 1, wherein the bus ring (40) is arranged on an outer peripheral side or an inner peripheral side relative to the plurality of coils (30) .

3. A stator according to either one of claims 2 and 3, further comprising:
an insulating member (20) disposed between the coil (30) and the stator core (10); and
a turning portion (21c) formed on the insulating member and projecting in an axial direction of the stator core, the wire pulled-out portion is turned to circumferential direction of the stator core at the turning portion as a turning point.

4. A stator (1) according to claim 3, wherein the wire pulled-out portion (31, 32) is turned at the turning portion (21c) to an opposite direction to a winding direction of the coil (30) at the axially end portion of the stator core (10).

5. A stator (1) according to either one of claims 3 and 4, wherein the insulating member (20) includes a holding portion (21a, 21b) that holds a portion of the wire pulled-out portion (31, 32) close to an end side thereof relative to a portion supported by the turning point.

6. A stator (1) according to any one of claims 3 through 5, wherein the tip end portion of the connection terminal portion (41a, 42a, 43a, 44a) formed on the bus ring (40) pinches the wire pulled-out portion (31,32) so as to be made contact therewith between the turning point and the holding portion (21a, 21b) in the circumferential direction of the stator core (10).

7. A stator according to any one of claims 3 through 6, wherein the turning portion (21c) includes a guide portion (21d) for guiding the wire pulled-out portion (31, 32) to the holding portion (21a, 21b) from the turning portion along the axial direction of the stator core and away from the stator core.

8. A stator (1) according to any one of claims 3 through 7, wherein the turning point of the insulating member (20) is formed at a portion away from the stator core (10) in the axial direction relative to a portion at which the wire pulled-out portion (31, 32) is pulled out from the coil (30).

9. A stator (1) according to any one of claims 1 through 8, wherein the tip end portion of the connection terminal portion (41a, 42a, 43a, 44a) formed on the bus ring (40) includes a substantially U-shape opening towards the coil (30) in the axial direction of the stator core (10).

10. A stator according to any one of claims 5 through 9, wherein the holding portion (21c) of the insulating member (20) includes a substantially U-shape opening towards an opposite side to the coil (30) in the axial direction of the stator core (10).
